# EUROPÄISCHE PATENTANMELDUNG

(11) **EP 1 279 649 A2**
(43) Veröffentlichungstag der Anmeldung: **29.01.2003**
(21) Anmeldenummer: 02016421.6
(22) Anmeldetag: 22.07.2002
(51) Int. Cl.: C04B 28/30, A62D 3/00

(54) **Verfahren zum Verfestigen von zähflüssigen und/oder pastösen und/oder rieselfähigen Abfällen**

(30) Priorität: 26.07.2001 DE 10136535
(71) Anmelder: K+S Aktiengesellschaft, 34131 Kassel (DE)
(72) Erfinder: Werthmann, Rainer, Dr., 34128 Kassel (DE)

(57) **Zusammenfassung**

Die Erfindung betrifft das Verfestigen von flüssigen und/oder pastösen und/oder rieselfähigen Abfällen durch Zugabe von vorzugsweise aufgemahlenem Kieserit oder Magnesiumsulfat wasserfrei als alleinige Zugabe. Die Erfindung kann insbesondere bei der Verfestigung und anschließenden Einlagerung von Destillationsrückständen aus der Aufarbeitung von Fotochemikalien in trockenen Bergwerkshohlräumen angewendet werden.

## Beschreibung

Die Erfindung betrifft das Verfestigen von Abfällen insbesondere zum Zweck der Einlagerung der verfestigten Produkte in trockene Bergwerkshohlräume zur Beseitigung oder bergtechnischen Verwertung.

Abfälle, die in trockenen Bergwerkshohlräumen beseitigt werden sollen, dürfen nach deutschen Vorschriften (Verwaltungsvorschrift zum Abfallgesetz) keine Flüssigkeiten freisetzen. Destillationsrückstände aus der Aufarbeitung von Fotochemikalien gehören zu den Abfällen, die in solche Hohlräume eingelagert werden. Je nach Intensität einer vorausgehenden Eindampfung kann es jedoch vorkommen, dass nicht genügend Wasser verdampft und der Abfall noch in zähflüssiger Konsistenz vorliegt. Vor dem Einlagern muss ein stichfester Zustand erzeugt werden.

Beim Einsatz von Abfällen zur bergtechnischen Verwertung ist häufig eine gewisse Mindestfestigkeit gefordert, die durch Konditionierung einzustellen ist.

Außerdem ist die Entwicklung schädlicher Gase wie zum Beispiel Ammoniak aus den Abfällen im Bergwerk nicht zulässig.

Bei der Entsorgung von Klärschlämmen oder zum Beispiel kontaminierten Böden laufen bei Anwesenheit von Feuchtigkeit häufig bakterielle Stoffwechselaktivitäten ab. Eine Möglichkeit, diese stark einzuschränken, besteht darin, diese Abfälle thermisch zu trocknen. Dabei wird einerseits das enthaltene Wasser entfernt, andererseits werden vorhandene Bakterien abgetötet. Diese Methode ist allerdings energetisch aufwendig.

Nach dem Stand der Technik sind eine Reihe von Verfahren bekannt, nach denen Schlämme entwässert und verfestigt werden können.

Die JP 07100499 A2 beschreibt zum Beispiel die Entwässerung von Schlämmen mittels Polymer-Flockungsmittel unter Addition von MgSO₄. Es entsteht zunächst nur ein konzentrierter, wässriger Schlamm, der weiter verfestigt werden muss.

In der US Statutory Invention Registration H283 ist ein chemisches Verfahren beschrieben, nach dem ein Ammoniak-Ausgasen aus verfestigten Abfällen dadurch eingeschränkt wird, dass den zu verfestigenden Schlämmen Magnesiumionen in Form von Magnesiumsulfat-Heptahydrat (Bittersalz) oder wasserfreies Magnesiumsulfat oder Magnesiumchlorid oder Magnesiumoxid oder Magnesiumnitrat oder Magnesiumphosphat sowie zusätzlich Phosphationen in Form von Phosphorsäure oder Natriumphosphat oder Kaliumphosphat, Kaliumhydrogenphosphat oder Magnesiumphosphat zugegeben werden. Das Ammoniak wird dabei als schwerlösliches Magnesiumammoniumphosphat festgelegt.

Nach JP 590 136 58 A2 wird eine Mischung aus 20-60 Prozent MgSO₄ und 40-80 Prozent wassergelöschter Schlacke zu Klärschlammasche gegeben, um einen wasserbeständigen Körper zu erhalten, der eine gewisse Festigkeit aufweist. Es wird der bekannte Sorelzement-Chemismus genutzt, um Abfälle zu verfestigen.

Alle diese Verfahren verwenden eine Magnesiumkomponente gemeinsam mit weiteren anorganischen oder organischen Komponenten (Polymere, Phosphate, alkalische Stoffe wie gelöschte Schlacke), um einen sich verfestigenden Schlamm zu erhalten.

Die Aufgabe der Erfindung ist es, ein Verfestigungsmittel zu finden, das ohne weitere Hilfsmittel einem wasserhaltigen Abfallschlamm oder einem flüssigen, wasserhaltigen Abfall/Abwasser zugesetzt werden kann, welche dann zu einem stichfesten oder höher belastbaren lagerfähigen Körper abbinden und bei denen eine Ammoniakausgasung nicht gefördert wird sowie bakterielle Aktivität weitgehend zurückgedrängt ist.

Es wurde nun gefunden, dass sich dazu natürlich vorhandener Kieserit aus Salzlagerstätten (MgSO₄·H₂O) hervorragend eignet.

Eine vergleichbare positive Wirkung wird auch durch Magnesiumsulfat wasserfrei, Langbeinit (K₂SO₄·2 MgSO₄) oder Leonit (K₂SO₄·2 MgSO₄·4 H₂O) erreicht. Es sind keine weiteren Additive oder weitere Komponenten erforderlich, die gewünschten Wirkungen treten allein durch die erfindungsgemäße Zugabe dieser MgSO₄-haltigen Salze ein.

Kieserit, vorzugsweise fein gemahlen, bindet das Wasser der entsprechend ihres Wassergehaltes erdfeuchten, pastösen oder flüssigen Abfälle bis zur maximalen Hydratform als Bittersalz (MgSO₄·7 H₂O). Eventuell vorher gelöst vorliegende Salze kristallisieren dabei zusätzlich aus. Je nach Zugabemenge resultiert eine stichfeste Konsistenz des Abfalls oder es entsteht ein so hartes Produkt, dass die mechanischen Anforderungen an eine bergtechnische Verwertung erfüllt sind.

Das Wasserbindevermögen des Kieserits beträgt bis zu 78 Prozent seines Eigengewichts, so dass er auch bei schadstoffhaltigen Wässern eingesetzt werden kann. Ein weiterer Vorteil der Verwendung von Kieserit liegt darin, dass er im pH-neutralen Bereich liegt. Es lassen sich im Gegensatz zu alkalischen Verfestigungsmitteln wie Weißkalk oder Portlandzement Abfälle mit beliebig hohen Gehalten an Ammoniumsalzen verfestigen, ohne dass eine zusätzliche Entwicklung von Ammoniak auftritt. Der erfindungsgemäße Kieserit zeigt seine Abbindewirkung weitgehend unabhängig vom Salzgehalt der Abfälle.

Kieserit ist außerdem sparsam in der Anwendung, da zum Beispiel bei stark salzhaltigen Abfällen nur derjenige Anteil des vorliegenden Wassers entfernt werden muss, der die Kristallisation der anderen Salze verhindert hat. Eine optimale Verfestigung des Abfalls wird erreicht bei Zugabemengen von Kieserit, die zwischen dem Eineinviertel- und dem Zweieinhalbfachen des Wassergehaltes des Abfalls liegen. Für Magnesiumsulfat wasserfrei liegt diese Menge bei dem Ein- bis Zweifachen des entsprechenden Wassergehaltes. Wird Langbeinit verwendet, so beträgt diese Menge das 1,8- bis 3,6-fache. Bei Verwendung von Leonit ist die 10- bis 20-fache Menge anzuwenden. Darunter liegende Mengen führen zu geringeren, aber je nach Anwendungsfall brauchbaren Verfestigungen.

Sollen trockene rieselfähige Abfälle zu festen Körpern gebunden werden, so ist vorher eine entsprechende Wassermenge erst zuzugeben.

Liegen die flüssigen, pastösen oder rieselfähigen Abfälle in basischer Form vor, ist der pH-Wert durch Zugabe von z.B. Salzsäure oder Eisen-III-Chlorid oder auch Natriumhydrogensulfat mindestens bis zum Neutralpunkt zu senken.

Der Kieserit, Langbeinit oder Leonit wird in der Regel in Körnungen mit einem Anteil von etwa 90 Prozent < 0,1 mm angewendet. Magnesiumsulfat wasserfrei kann in gröberen Körnungen verwendet werden, vorzugsweise 95 Prozent < 0,8 mm.

Die erfindungsgemäßen Magnesiumsalze werden in den entsprechenden Mengen je nach geforderter Konsistenz des verfestigten Abfalls dem Abfall zudosiert, die Masse gemischt und in Behältnisse, z.B. Fässer oder Big-Bags, gefüllt und dort vor dem Einlagern in die Bergwerkshohlräume ein oder mehrere Tage stehen gelassen, bis sie die gewünschte Festigkeit haben. Es ist auch möglich, das gemischte Material direkt in Bergwerkshohlräume einzubringen und dort verfestigen zu lassen oder über Tage auszuhärten und als loses Schüttgut zu verbringen. Für vollkommen ausgehärtete Massen sind Abbindezeiten von bis zu einem Monat erforderlich.

Die Erfindung ist insbesondere ausführbar zur Verfestigung von Destillationsrückständen aus der Aufarbeitung von Photochemikalien, von Klärschlämmen, z.B. aus Abwasseraufbereitung, von trockenen Klärschlamm- oder anderen Aschen, von kontaminiertem Bodenaushub, von Filterkuchen zum Beispiel aus der Abwasserbehandlung.

### Nachfolgende Beispiele verdeutlichen das breite Anwendungsspektrum:

### Beispiel 1

### Verfestigung von Fotochemikalien-Destillationsrückständen

Fotochemikalien-Destillationsrückstände (zum Beispiel mit einem Trocknungsverlust (160°C) von ca 40 % und einem Glühverlust bei 550° C von über 50 %, Geruch kräftig nach Ammoniak) werden mit ca. 30 Massen-% (bezogen auf das Ausgangsmaterial) an feingemahlenem Kieserit versetzt. Nach spätestens 28 Tagen ist eine ausgehärtete Masse entstanden, die gemessen mit dem Taschenpenetrometer eine Festigkeit von mehr als 1,25 MPa bei max. 2 cm Eindringtiefe zeigt und bei der ein Ammoniakgeruch nicht mehr wahrnehmbar ist.

### Beispiel 2

### Zurückdrängung bakterieller Aktivität bei verfestigten Klärschlämmen

Mit der Kammerfilterpresse abgepresster Klärschlamm, Trockensubstanz ca. 50 %, entwickelt bei Warmlagerung (25 bis 40° C) in teilweise gefüllten, dicht verschlossenen Glasflaschen im Luftraum der Flaschen einen CO₂-Gehalt von > 6 Vol.%. Nach Vermischung mit 50 % des Eigengewichts an feingemahlenem Kieserit und weiterer Warmlagerung in verschlossener Flasche ist der CO₂-Gehalt im Luftraum der Flasche nach spätestens 8 Tagen auf < 0,2 Vol.% reduziert. Die Verhältnisse ändern sich auch nach Wochen nicht mehr.

## Patentansprüche

1. Verfahren zum Verfestigen von flüssigen und/oder pastösen und/oder rieselfähigen Abfällen durch Zugabe eines Verfestigungsmittels, **dadurch gekennzeichnet, dass** allein Kieserit oder Magnesiumsulfat wasserfrei oder Langbeinit oder Leonit oder Mischungen aus diesen Magnesiumsalzen dem Abfall zugegeben, mit diesem vermischt und anschließend die Mischung ausgehärtet wird.

2. Verfahren zum Verfestigen nach Anspruch 1, **dadurch gekennzeichnet, dass** bei Vorliegen basischer Abfälle vor Zugabe der Magnesiumsalze der pH-Wert durch Zugabe von sauren Neutralisationsmitteln mindestens bis zum Neutralisationspunkt gesenkt wird.

3. Verfahren nach Anspruch 2, **dadurch gekennzeichnet, dass** vorzugsweise Salzsäure oder Eisen-III-Chlorid oder Natriumhydrogensulfat zugegeben wird.

4. Verfahren nach Anspruch 1, **dadurch gekennzeichnet, dass** zur Verfestigung von rieselfähigen trockenen Abfällen vor der Zugabe der Magnesiumsalze eine entsprechende Wassermenge zugegeben wird.

5. Verfahren nach Anspruch 1, 2 und 4, **dadurch gekennzeichnet,**
**dass** Kieserit in Mengen von 1 bis 250 %,
Magnesiumsulfat wasserfrei in Mengen von 1 bis 200 %,
Langbeinit in Mengen von 1 bis 360 %,
Leonit in Mengen von 1 bis 2000 %, jeweils bezogen auf den Wassergehalt des Abfalls zugegeben wird.

6. Verfahren nach Anspruch 1, 2, 4 und 5, **dadurch gekennzeichnet, dass** Kieserit, Langbeinit oder Leonit vorzugsweise in Körnungen mit einem Anteil von etwa 90 Prozent < 0,1 mm angewendet wird und Magnesiumsulfat wasserfrei in gröberen Körnungen, vorzugsweise 95 Prozent < 0,8 mm angewendet wird.

7. Verfahren nach Anspruch 1, 2, 4, 5 und 6, **dadurch gekennzeichnet, dass** die Magnesiumsalze dem Abfallgut zudosiert, anschließend mit diesem vermischt und die Mischung in Behältnisse gefüllt wird, wonach nach einer Aushärtungszeit von 1 Tag bis 1 Monat die gefüllten Behältnisse in den vorgesehenen Bergwerkshohlraum eingelagert werden.

8. Verfahren nach Anspruch 1, 2, 4, 5 und 6, **dadurch gekennzeichnet, dass** die Magnesiumsalze dem Abfallgut zudosiert, anschließend mit diesem vermischt und die Mischung direkt in Bergwerkshohlräume verbracht oder nach der Erstarrung nach einer Aushärtungszeit von 1 Tag bis 1 Monat als loses Schüttgut in die vorgesehenen Bergwerkshohlräume eingebracht werden.

9. Verwendung von Kieserit oder wasserfreiem Magnesiumsulfat oder Langbeinit oder Leonit oder Mischungen daraus als alleinige Zugabe zu flüssigen und/oder pastösen und/oder rieselfähigen Abfällen zur Verfestigung derselben.
